Europäisches Patentamt

(19) European Patent Office

Office européen des brevets

(11) Publication number: **0 055 974**
A2

(12) # EUROPEAN PATENT APPLICATION

(21) Application number: **81810515.7**

(22) Date of filing: **23.12.81**

(51) Int. Cl.³: **G 03 B 17/46**
**G 03 B 19/18**

(30) Priority: **29.12.80 CA 367641**

(43) Date of publication of application:
**14.07.82 Bulletin 82/28**

(84) Designated Contracting States:
**AT BE CH DE FR GB IT LI LU NL SE**

(71) Applicant: **O-CORE- Centre for Cold Ocean Resources Engineering Memorial University of Newfoundland**

**St. John's Newfoundland A1B 3X5(CA)**

(72) Inventor: **Allan, Alastair John c/o Instrumar Limited Memorial Campus Mem. Univ. of Newfoundland St. John's Newfoundland A1B 3X5(CA)**

(72) Inventor: **Butt, Kenneth Alexander 29 Glenview Terrace Extension St. John's Newfoundland(CA)**

(72) Inventor: **Johnstone, John Francis 10 Grieve Street St. John's Newfoundland(CA)**

(72) Inventor: **Reid, David Lloyd P.O. Box 457 Manuels Newfoundland(CA)**

(74) Representative: **Gasser, François W. Mühlemattstrasse 57 CH-3007 Bern(CH)**

(54) Time lapse and exposure control apparatus for camera.

(57) Time lapse and exposure control apparatus for camera is provided for automatically controlling time lapse and exposure intervals in a photographic camera (13). The apparatus has a stepper motor (10) controlled by programmable control and timing circuits (16, 17, 18, 20, 21, 22, 23) driving the film transport mechanism (12). It also has the motor shaft (11) position fed back to the control circuit by means of an optical encoding disc (14). An advantage of the present invention is that it is adaptable to be integrally built into a camera or, as in the preferred embodiment described, be attached externally to a motion-picture camera (13) without undue modification thereof. Yet another advantage is that the apparatus according to the present invention utilizes off-the-shelf integrated circuits and components, save the optical encoder disc.

FIG.1

Croydon Printing Company Ltd.

- 1 -

## Time lapse and exposure control apparatus for camera

The invention relates to apparatus for automatically transporting and exposing at predetermined intervals a photographic film in a camera having a shutter and a film transport mechanism coupled therewith.

Motion-picture cameras in particular have been used for single frame, time lapse, photographic recording. In addition to film advance with a selected frame recurrence period, selection of the frame exposure duration is also necessary. Several United States patents disclose examples of mechanical, electromechanical and electronic systems for the periodic energizing of drive motors and automatic determination and control of exposure time.

United States Patent No. 2,912,896 provides a time lapse attachment for operating the single-frame exposure mechanism of a motion-picture camera at selected intervals having a motor driven cam actuating the single frame exposure mechanism.

United States Patent No. 3,216,777 disclose an auxillary motor attached to a camera, the motor being controlled by a periodically energizable timing switch device for periodically actuating the camera by the motor shaft.

United States Patent No. 3,520,391 discloses an intermittent drive mechanism having a constant speed motor and a controllable electronic clutch for time lapse photography. An intervalometer provides timing signals for energizing the clutch which drives·the camera and which has a cam on its shaft to operate a switch and maintain the clutch energized for one full cycle.

United States Patent No. 3,664,736 discloses a timing circuit adapted to be placed into operation by a remotely produced signal which thereafter periodically energizes and de-energizes the drive motor. A single-frame mechanism includes a first rotatable member directly driven by the motor and winds a spring which drives the shutter.

United States Patent No. 3,674,348 teaches selective actuation of a camera and exposure in a predetermined time interval controlled by monostable circuits.

United States Patent No. 3,790,262 provides a camera control system for time lapse photography where the period between successive camera operations can be adjusted over a wide time range. The control system includes a timing oscillator providing a train of output clock pulses with means for adjusting the pulses over a range of frequencies, a timer/counter, and a solenoid for operating the camera.

United States Patent No. 3,854,805 teaches an exposure time control mechanism interposed between the shutter blade and the shutter driving shaft. The rotation of the driving shaft is intermittently transmitted to the shutter blade to produce long exposures.

United States Patent No. 4,052,126 discloses a camera using an electric motor having an electronic speed control circuit controlled by the operator to modify the motor speed for selecting various frames per second. The motor is a continuous drive motor controlled by a frequency/voltage transformer.

United States Patent No. 4,183,635 teaches control of a shutter driving motor by two time-constant networks triggering respective pulse generators of the one-shot type. The first time-constant network determines an exposure interval automatically, while the second time-constant network is adjustable to establish a selected recurrence period. At the start of an operating cycle, the shutter is in an unblocking position, a pulse from the first generator releases the shutter for movement into a blocking position until a pulse from the second generator restarts the cycle by letting the shutter return to its unblocking position. The driving motor is a continuous drive motor and its shaft supports a disc serving as carrier for several interconnected conductor tracks coating with respective contactors or brushes which together directly initiate various operations, including motor action.

Scientific applications of time lapse photography require high standards of flexibility, reliability and precision, as well as unattended, but previously programmable, operation. These requirements are not satisfied by prior art apparatus.

The invention as claimed intends to provide reliable, precise control apparatus for time lapse photography, utilizing a pulse driven stepper motor controlled without the use of contacting brushes or the like, thus providing precision and reliability.

The invention as claimed also provides apparatus preprogrammable to select, independently, time lapse and exposure intervals within wide ranges, whereafter the apparatus operates unattended for extended periods of time.

An advantage of the invention is that it provides apparatus also capable of being used externally with a motion-picture camera without undue modification thereof.

A feature of the invention is the provision of feedback of the drive motor shaft position to a motor control circuit by means of an optical disc encoder cooperating with an optical switch.

Another feature of the invention is the control of the stepper motor speed directly by the frequency of a pulse train driving the motor.

A feature and an advantage of the invention is that a single precision motor is used to accomplish film loading and transport, as well as shutter actuation.

One way of carrying out the invention is described in detail below with reference to drawings which illustrate only one specific embodiment, in which:

Figure 1 is a block schematic of an apparatus according to a preferred embodiment of the invention for externally controlling a motion-picture camera to provide time lapse photography and selected exposure;

Figure 2 is a circuit schematic of the timing and control logic shown in Figure 1;

Figure 3 is a circuit schematic of the stepper motor, motor driver, speed control, and optical switch shown in Figure 1; and

Figure 4 shows front and side elevations of the optical shaft encoder depicted schematically in Figure 1.

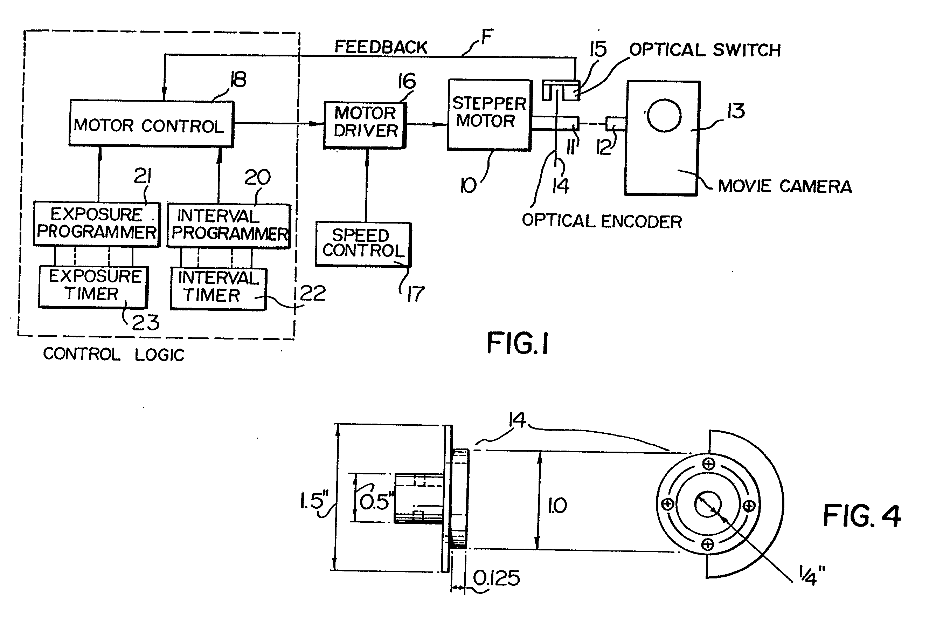

Referring now to Figure 1 of the drawings a preferred apparatus, particularly suitable for use with a motion-picture camera model H16 SBM of the Bolex International Company, comprises a stepper motor 10 having its shaft 11 coupled to the shaft 21 of the camera 13. The motor shaft 11 supports an optical encoder disc 14 secured thereto which, depending on the angular position of the shaft 11, activates or blocks optical switch 15 (preferably type SPX 1874-11 manufactured by SPECTRONIX INC., Texas, U.S.A.). The stepper motor 10 is energized by motor driver 16, which is supplied by a train of pulses having a frequency of 24 pulses per second (PPS) from speed controlling pulse generator 17. The pulses from the generator 17 are gated into the driver 16 by a signal from motor control logic 18, to which the signal from the optical switch 15 is fed back via bus F. The control logic 18 responds to signals from an interval programmer 20 for timing intervals between successive frame exposure, as well as to signals from exposure programmer 21 for timing the duration of each frame exposure. The interval programmer 20 selects timing signals as programmed from interval timer 22, while the exposure programmer 21 selects time signals as programmed from exposure timer 23.

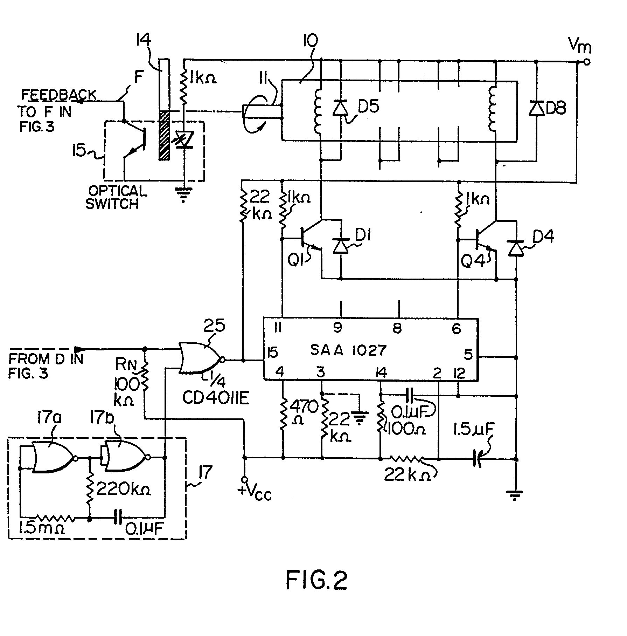

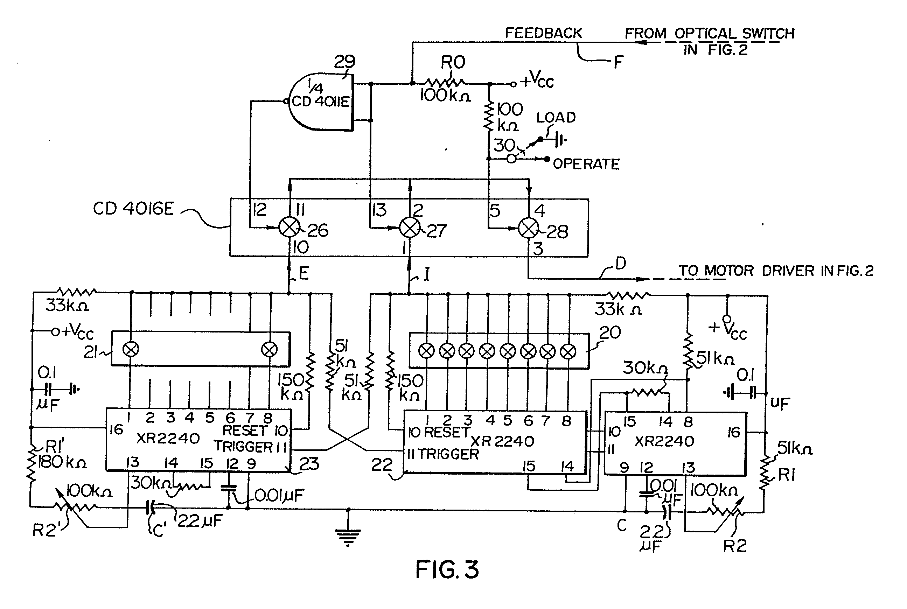

Turning now to Figure 2 and 3, a more detailed description of the circuit and its operation will be given.

The stepper motor 10, schematically illustrated in Figure 2, has four separate windings as illustrated and is preferably a unipolar motor type LC82601-P2 manufactured by North American Phillips Controls, Cheshire, Connecticut, U.S.A. Its step angle is 15° with a non-cumulative step error of ±1°. It thus makes 24 steps per revolution. Each winding of the motor 10 is driven by a silicon power transister Q1, Q2, Q3 and Q4 (preferably TIP121 of TEXAS INSTRUMENTS INC., Dallas, Texas), each protected by two associated diodes D1/D5, D2/D6, D3/D7 and D4/D8, respectively, against inductive inverse spikes generated by the associated motor winding. The four transistors are controlled at their bases by a pulse-to-step integrated drive circuit 24 of the type No. SAA1027, manufactured by NORTH AMERICAN PHILLIPS CONTROL CORP., Cheshire, Conn., U.S.A. The integrated circuit 24 is itself driven at pin 15 from a NAND gate 25, which gates or inhabits a pulse train generated by the astable multivibrator (speed control generator) 17, itself comprised of two NAND gates 17a and 17b and associated resistors and capacitors, which, having the values shown in the schematic, yield a pulse train having a frequency of 24 PPS. Such frequency rotates the stepper motor shaft with a nominal angular speed of 1 revolution per second. This is acceptable for advancing and loading the film in the camera 13. Pin 3 of the drive circuit 24 is connected via a resistor to +Vcc to ensure CCW rotation of the shaft 11; a ground would cause CW rotation. When the other input to the NAND gate 25 is high, the pulse train generated by the generator 17 passes through the NAND gate 25 and appears at pin 15 of the integrated circuit 24 inverted. On the positive going edge of the pulses at the pin 15, the motor shaft 11 steps or rotates 15°. The gating pulse to the NAND gate 25 originates from the motor control circuit 18 in Figure 1, shown in detail in Figure 3. This gating signal is a function of two factors: the timing signals, and the state of the optical switch 15. The latter is itself dependent on whether the optical encoder disc 14 blocks or permits the light to pass thereacross. Since the encoder disc 14 (preferably made of aluminum) is affixed to the shaft 11 at such an angle that it permits light to pass thereacross when the shutter of the camera 13 is in the expose position, as soon as the optical switch 15 is ON, the motor is stopped by means of the feedback of the ON signal to the motor controller 18. The encoder disc itself has the simple profile shown in Figure 4, dividing a full shaft revolution into two equal halves, one switching the optical switch 15 ON and the other OFF, with the ON half coinciding with an open shutter of the camera 13 to expose one frame of film.

Turning now to Figure 3, the motor controller 18 comprises essentially three controlled switches 26, 27 and 28 (three switches of a quad switch integrated circuit type CD401GE manufactured by R.C.A. Corp., U.S.A.), and a NAND gate 29 (1/4 of a gate quad IC type CD4011E), and a manual switch 30 which is normally in the operate state (i.e., open) unless the film is being loaded in the camera 13. The switch 28, in the normal or operating state, is always ON converying the states at the output of each of the other switches 26 and 27 via bus D to the NAND gate 25 (Figure 2). The switch 27 receives its ON/OFF command from the optical switch 15; it is thus OFF when the latter is ON, i.e., during expose periods. The input of the switch 27 comes from the output of the interval programmer and timer circuits 20 and 22 via bus I. The switch 26 receives its ON/OFF command from the NAND gate 29, which has both its inputs high unless the optical switch 15 is ON. Thus, the switch 26 is OFF except when the optical is ON, i.e., during exposure periods. The input to the switch 26 comes from the output of the exposure programmer and timer circuits 21 and 23, via bus E.

As may be noted from Figure 3, an additional timer circuit 22a is used in tandem with the circuit 22. Such additional circuit is used in order to provide for a wider range for selecting the time lapse interval between exposures. A suitable integrated circuit (IC) for the timer circuits 22, 22a and 23 is that type XR2240, manufactured by Exar Integrated Systems, Inc. of Sunnyvale, California, U.S.A. The associated programmers 20 and 21 are composed simply of eight manual switches each as shown. Each of the manual switches selects a multiplier of the basic timer unit set by external resistors R1 and R2 at the capacitor C. Depending on the position of the switch in the programmer 20 or 21, the multiplier is a power of 2, so that a multiplication factor of between 1 (i.e., $2^0$) and 255 (i.e., $2^8-1$) is available. The cascading of the additional timer 22a yields a further multiplication factor of 255. Thus with the values shown in Figure 3, a time lapse interval between exposures may be chosen between 1 hour and 255 hours, and an exposure duration may be chosen between 1 second and 255 seconds. Of course, other timer ranges may be chosen.

An operating cycle of the apparatus will now be described with reference to Figures 2 and 3 of the drawings, together with the following table which summarizes the cycle.

| Sequence | Interval Timer | Exposure Timer | Optical Switch | Motor Action | Comment |
|----------|----------------|----------------|----------------|--------------|---------|
| 0 | LOW | HIGH | OFF | Stationary | Interval |
| 1 | HIGH | HIGH | OFF | Advances 180° | Interval ended |
| 2 | HIGH | LOW | ON | Stationary | Exposure begins |
| 3 | HIGH | HIGH | ON | Advances 180° | Exposure completed |
| 0 | LOW | HIGH | OFF | Stationary | Cycle repeat |

Assuming that initially the optical switch 15 is OFF, a HIGH is applied via the feedback bus F (bus F is grounded or LOW when the optical switch is ON; otherwise it is HIGH by virtue of resistor $R_0$ connecting it to the positive voltage supply +Vcc) to the switch 27 ON. At the same time and for the same reason, the output of the NAND gate 29 is LOW, causing the switch 26 to be OFF. Should both the bus 1 be LOW, the output of the switch 28, i.e., the bus D, will be LOW and the NAND gate 25 will inhibit the pulse train from the generator 17 from driving the motor 10, which is stationary. This is the status given opposite step 0 in the sequence of events summarized in the table, supra.

At the end of a time lapse interval, the bus I goes HIGH; this HIGH is applied to the bus D via the switch 28 and the NAND gate 25 gates the pulse train to drive the motor 10. The motor 10 will advance (step 1 in the table) until the optical encoder disc 14 causes the optical switch 15 to go ON, which occurs due to the shape of the disc 14, after the disc (i.e., motor shaft 11) has rotated 180°. Immediately the optical switch 15 goes ON, the switch 27 goes OFF and the NAND gate 25 inhibits the pulse train and the motor 10 stops after a 180° rotation in the expose position (step 2 in the table). Simultaneously, as the bus I went HIGH at the end of the time lapse interval, the exposure timer 23 is triggered at pin 11 to begin timing, which causes the bus E to go LOW (to inhibit motor movement during exposure). The bus E remains LOW until the exposure expires and then goes HIGH, which high is communicated via the switches 26 and 28 and via the bus D to the NAND gate 25 to cause the motor 10 to advance (step 3 in the table).

The motor 10 advances until the optical switch 15 goes OFF, i.e., after 180°, which in turn causes the NAND gate 29 and the switch 26 to turn OFF, and since simultaneously with the end of the exposure period and the bus E going HIGH, the interval timer 22 has been triggered at pin 11 to begin timing a time lapse interval, the bus I goes LOW and the NAND gate 25 inhibits the pulses from reaching the circuit 24. The motor 10 is again stationary for the time lapse interval until the cycle begins anew.

In the load position of the switch 30, the switch 28 is permanently OFF and the NAND gate 25 permanently ON by virtue of resistor's $R_N$ connection to the positive supply lead +Vcc. Thus the motor 10 proceeds at 1 revolution/second to load the film.

Conveniently, the motor 10 is easily mounted to the side of the Bolex camera 13 by means of four screws. The optical switch 15 is attached by means of a bracket parallel to the motor shaft 11, and must have the encoder disc 14 intermediate its two components, the LED and phototransistor. The shaft 11 of the motor 10 is coupled directly to the film transport and shutter mechanism of the camera 13. Should this apparatus be adapted to be integrally built into a camera, a geared mechanism may be necessary to couple the motor shaft. In the present preferred embodiment, however, gearing is not necessary.

The power requirements of the total apparatus is 6 watts at 12 Vdc. However, it is desirable to derive the supply voltage +Vcc to the circuitry from the main power supplied to the motor 10 by means of secondary regulator, in order to avoid fluctuations caused by motor action. A circuit supply voltage +Vcc of 8 volts is adequate.

In the present preferred embodiment, only the motor 10 with the attached encoder disc 14 and optical switch 15 are attached to the camera 13. The driving and control circuits are remotely located and cables establish the connection with the camera attachment.

Claims:

1. Apparatus for automatically transporting and exposing at predetermined intervals a photographic film in a camera (13) having a shutter and a film transport mechanism coupled therewith, comprising a motor (10) having a rotatable shaft(11) coupled to the film transport mechanism (12), and driving means (16) for energizing the motor (10), characterized in that the motor (10) is a stepper motor, that programmable control means (18, 20, 21, 23, 23) activate the driving means (16) at preprogrammed times and that feedback means relay the angular position of the shaft (11) to the programmable control means (18).

2. An apparatus as claimed in claim 1, in which the feedback means comprises an optical encoder disc (14) mounted on the shaft (11) cooperates with an optical switch (15) which transmits a feedback signal to the programmable control means (18) as the shaft (11) assumes at least one particular angular position.

3. An apparatus as claimed in claim 2, in which the driving means (16) includes pulsed switching means (Q1 to Q4) adapted to supply sufficient power to the stepper motor (10) in response to a pulse train having a predetermined freqency generated by a pulse generator (17) gated by the programmable control means (18).

4. An apparatus as claimed in claims 1, 2 or 3, in which the stepper motor (10) is of the type having non-cumulative step error.

5. An apparatus as claimed in claims 2, 3 or 4, in which the feedback signal causes the programmable control means (18) to de-activate the driving means (16) for a preselected duration of time during which a frame of the photographic film is exposed.

6. An apparatus as claimed in claims 1, 2, 3, 4 or 5 in which the programmable control means comprises programmable time lapse interval timing means (20, 22) and first switching means (27) connected to an output thereof (I), programmable exposure duration timing means (21, 23) and second switching means (26) connected to an output thereof (E), the first and the second switching means (27, 26) controlled by the feedback means (14, 15), and the first and the second switching means (27, 26) controlling the driving means (16).

7. An apparatus as claimed in claims 2, 3, 4, 5 or 6, in which the at least one particular angular position of the shaft (11) coincides with a position of the shutter exposing a frame of the photographic film.

8. An apparatus as defined in claims 6 or 7, in which the first and the second timing means mutually trigger each other at the end of their respective timing periods.

9. An apparatus as claimed in any of claims 1 to 8, in which the driving means (16) comprises pulse-to-step converter circuit means controlling a plurality of power switching means (Q1 to Q4) adapted to drive an equal plurality of windings of the stepper motor (10).

10. An apparatus as defined in any of claims 1 to 9, in which the camera (13) is a motion-picture camera, and the rotatable shaft (11) is coupled to an external film transport shaft (12) of the motion-picture camera (13).

FIG. 1

FIG. 4

FIG.2

FIG. 3